(19) Europäisches Patentamt
European Patent Office
Office européen des brevets

(11) **EP 1 501 280 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
*H04N 1/60* *(2006.01)* *G01J 3/50* *(2006.01)*

(21) Anmeldenummer: **03016534.4**

(22) Anmeldetag: **23.07.2003**

(54) **Digitaldrucker**

Digital printer

Imprimante numérique

(84) Benannte Vertragsstaaten:
**CH DE FR GB IT LI**

(43) Veröffentlichungstag der Anmeldung:
**26.01.2005 Patentblatt 2005/04**

(73) Patentinhaber: **Gretag-Macbeth AG**
**8105 Regensdorf (CH)**

(72) Erfinder:
• **Senn, Thomas**
**8157 Dielsdorf (CH)**

• **Lamy, Francis**
**8702 Zollikon (CH)**

(74) Vertreter: **Muschke, Markus Artur Heinz**
**Patentanwälte Schwabe, Sandmair, Marx**
**Stuntzstrasse 16**
**81677 München (DE)**

(56) Entgegenhaltungen:
EP-A- 0 741 491     EP-A- 1 267 217
DE-A- 19 722 073     US-A1- 2002 080 373
US-A1- 2003 063 275     US-B1- 6 580 524

**Beschreibung**

Die Erfindung betrifft einen Digitaldrucker gemäss dem Oberbegriff des unabhängigen Anspruchs 1.

Color Management ist heute ein anerkanntes Verfahren, um auf verschiedensten Ein- und Ausgabegeräten eine konsistente Farbwiedergabe zu erhalten. Die entsprechenden Algorithmen und Verfahren sind wohl bekannt und entsprechende Produkte sind auf dem Markt (z.B. die Software "Profile Maker" der Firma Gretag-Macbeth AG). Speziell bei der Ausgabe von Referenzdrucken zur Begutachtung durch den Kunden (sog. Proofs) werden an Color Management Systeme höchste Anforderungen gestellt.

Dennoch weisen die heute verwendeten Verfahren und Abläufe in der konkreten Implementation eines Color Management Arbeitsflusses erhebliche Schwachstellen auf. Die Anwendung des Color Management ist komplex. Anwender werden meist nur mangelhaft unterstützt. Die potentiellen Fehlerquellen sind enorm. Die korrekte Anwendung der Arbeitsflüsse wird / kann heute nur visuell beurteilt werden. Um die Abläufe zu vereinfachen, müssen zukünftige Color Management Systeme intelligenter werden. Insbesondere müssen Digitaldrucker selbstkalibrierend werden, um den Benutzer zu entlasten. Es ist dazu notwendig, Farbmessgeräte direkt in den Digitaldrucker zu integrieren. In letzter Zeit sind von verschiedenen Firmen Patentanmeldungen hinterlegt worden (vg. z. Bsp. US-A 2002/0080373, US-A 2002/162470, USA 2002/162470, DE-A 19844495, US-A 5680327, DE-A 19722073), die im wesentlichen das Ziel verfolgen, durch Integration eines Farbmessgeräts in digitale Drucker die Erfassung der Messdaten, die im Color Management Arbeitsfluss zur Erzeugung der Farbprofile (ICC Profile) benötigt werden, zu automatisieren sowie eine konsistente Farbausgabe zwischen Geräten verschiedener Hersteller zu erreichen.

Ein wesentlicher Hinderungsgrund beim breiten Einsatz von Color Management Lösungen liegt in der Komplexität und der dadurch induzierten Fehleranfälligkeit der Abläufe. Obwohl die in den genannten Patentanmeldungen beschriebenen Systeme zur Vereinfachung / Optimierung des Color Management Arbeitsflusses beitragen, sind durch diese für die Reduktion der Systemkomplexität wichtige Aspekte in keiner Art und Weise abgedeckt. Insbesondere decken die in den genannten Patentanmeldungen beschriebenen Systeme den Aspekt der Profilauswahl, Profilverifikation, der effizienten Abhandlung des Nass-trocken-Problems, der Optimierung der verwendeten Farbmenge sowie im allgemeinen der Kontrolle des Ausgaberesultates und den Aspekt der Rückverfolgbarkeit in keiner Art und Weise ab.

Allgemeinstes Ziel dieser Erfindung ist es daher einen Digitaldrucker mit einem eingebauten Farbmessgerät und integriertem Farbmanagement dahingehend zu verbessern, dass die folgend beschriebenen Aspekte eines Color Management unterstützten Arbeitsflusses in einer für den Benutzer optimalen Art und Weise realisiert werden.

Diese der Erfindung zugrundeliegende Aufgabe wird durch den durch die Merkmale des unabhängigen Anspruchs 1 gekennzeichneten erfindungsgemässen Digitaldrucker gelöst.

Vorteilhafte Ausgestaltungen und Weiterbildungen des erfindungsgemässen Digitaldruckers sind Gegenstand der abhängigen Ansprüche.

Konkreter beschäftigt sich die Erfindung gemäss einem ersten Hauptaspekt mit der Systemoptimierung und der Verbesserung des Störanfälligkeitsverhaltens bei der Messwerterfassung.

Das Erfassen der benötigten Daten soll so einfach wie möglich sein. Der klassische Ansatz für das Color Management von Remissionsmessvorlagen besteht darin, dass ein zweidimensionales Testchart durch ein xy-Messsystem ausgemessen wird. Dieser häufig gebrauchte Ansatz wird in einem Inkjet Drucksystem typischerweise (wie z.B. in US-A 2002/0080373 aufgezeigt) dadurch realisiert, dass parallel zum beweglichen Druckkopf ein mitbewegter farbmetrischer Messkopf montiert wird. Die Kombination des Papiervorschubs und der transversalen Bewegung des Messkopfs quer zur Vorschubrichtung führt zu der gewünschten Abtastung des zweidimensionalen Testcharts. Diese Implementation führt zu einer relativ teuren und störanfälligen Lösung, da die bewegte Masse zunimmt und der farbmetrische Messkopf typischerweise einer hohen Verschmutzung durch Farbnebel ausgesetzt ist und dadurch die Qualität der Messresultate und damit die Systemleistung leidet.

Gemäss dem genannten ersten Hauptaspekt der vorliegenden Erfindung werden sowohl die Systemkosten optimiert als auch das Verhalten betreffend Störanfälligkeit des Verfahrens wesentlich verbessert, indem die zur Messung und Profilierung benötigen Testfelder in einer Reihe an einer festen Position des Testchartes, vorzugsweise am Rand des Papiers, ausgegeben und ausgemessen werden.

Eine weitere konkretere Aufgabe der vorliegenden Erfindung betrifft die Verbesserung der Handhabung von Profilen.

Der allseits bekannte Ansatz in der Geräteprofilierung ist heute derart, dass für eine bestimmte Kombination von Papier, Farben, UCR Einstellungen u.s.w. ein sogenanntes Ausgabeprofil berechnet wird. Abhängig von den gewählten Druckbedingungen bei der Ausgabe (z.B. dem gewählten Papier) muss dann typischerweise in den Einstellungen des Druckertreibers ein bestimmtes Profil vorgewählt werden, um die korrekte Ausgabe zu erhalten. Diese Einstellung ist fehleranfällig. Eine falsche Einstellung führt aber zu einem falschen Ausgaberesultat.

Diese Schwierigkeit wird gemäss einem weiteren Hauptaspekt der vorliegenden Erfindung dadurch gelöst, dass die Auswahl des korrekten Farbprofils durch den Digitaldrucker selbst automatisch vorgenommen werden kann. Gemäss einem zusätzlichen Aspekt werden durch die vorgenommenen Messungen weitere Parameter wie z.B. das Wegschlagverhalten des Bedruckstoffes klassifiziert und dieses Wissen dazu benutzt, entsprechende Korrekturen / Klassifikationen vorzunehmen, die das Druckresultat zu optimieren erlauben.

Eine weitere konkretere Aufgabe der Erfindung betrifft die Verifikation der Profilauswahl.

Auf Grund des grossen Farbfehlers bei falscher Profilwahl, auf welche Art immer eine Ausgabeprofil eines Digitaldruckers bestimmt wird (automatisch durch den Drukker selbst oder durch manuelle Anwahl), muss in einem benutzerfreundlichen System sichergestellt werden, dass das richtige Profil gewählt worden ist, und dass das Profil immer noch gültig ist und nicht etwa durch ein Wegdriften des Druckergebnisses ungültig bzw. unbrauchbar geworden ist. Ein weiterer Hauptaspekt der vorliegenden Erfindung zeigt auf, wie die Gültigkeit des Ausgabeprofils auf Grund von Messungen eines Testkeiles und / oder des ausgegebenen Drucks verifiziert werden kann. In einem weiteren Aspekt wird ferner aufgezeigt, wie die Gültigkeit der Profilierung dem Anwender auf eine intuitive und benutzerfreundliche Art und Weise durch Ausdruck zusätzlicher Information angezeigt werden kann.

Eine weitere Schwierigkeit, die bei der Anwendung von in Digitaldruckern eingebauten Color Management Funktionen und der dazu benötigten Messtechnik entsteht, liegt in der Problematik begründet, dass bei den meisten Druckverfahren (Inkjet, Offset, Flexo ..) nasse Farbe auf ein trockenes Papier aufgebracht wird. Durch die Trocknungsprozesse verändern sich die Farben nach dem Druck. Ein Messsystem, das die Farben zeitlich nahe nach dem Druck misst, wird deshalb nie die gleichen Messwerte für dieselbe Farbe liefern, nachdem die Farbe getrocknet ist. Für die Beurteilung des endgültigen Druckergebnisses ist aber der vollständig getrocknete Druck massgebend.

Ein weitere konkretere Aufgabe der vorliegenden Erfindung besteht daher darin, mit Hilfe von mathematischen und/oder messtechnischen Mitteln die intern gemessenen Werte mit den extern im trockenen Zustand gemessenen Werten zu korrelieren und diese Korrelation in einen ICC kompatiblen Arbeitsfluss nahtlos und für den Benutzer optimal zu integrieren. In einem weiteren Teilaspekt wird zudem aufgezeigt, wie durch zweimaliges Messen im zeitlichen Versatz derselben Probe mit dem im Digitaldrucker integrierten Farbmesssystem die Trocknungsaspekte charakterisiert und kompensiert werden können.

Beim Ausdruck sind neben den vierfarbigen (CMYK) Bildern mehr und mehr auch die korrekte Ausgabe von Sonderfarben (Spot Colors) wichtig. Eine weitere konkretere Aufgabe der vorliegenden Erfindung besteht darin, das eingebaute Messsystem zur immanent wichtigen Kontrolle von Spotfarben auf dem Digitaldruck verwenden zu können. Dabei wird insbesondere aufgezeigt, wie dynamisch generierte Messstreifen zu diesem Zweck hervorragend verwendet werden können und/ oder wie alternativ die Farben direkt im Nutzen gemessen werden können.

Ein weiteres Hindernis in der korrekten Anwendung heutiger Digitaldrucksysteme besteht darin, dass die Papierart aus einer bestimmten Klasse vorgewählt werden muss. Aus dieser Papierartklasse leitet z.B. ein Inkjet-Drucksystem die auf das Papier aufgebrachte Farbmenge ab. Sobald neue unbekannte Papiere zum Einsatz kommen, wird sich das Druckresultat auf Grund der nicht bekannten Menge der aufzubringenden Farbe verschlechtern.

Gemäss einem weiteren wichtigen Aspekt der Erfindung wird dieses Problem mit einem Kalibrationsalgorithmus gelöst, der auf den eingebauten Sensor zurückgreift und der es ermöglicht, mit dem gezeigten Verfahren die optimale auf den Druck aufzubringende Farbmenge zu bestimmen, um einerseits einen möglichst grossen Farbraum zu erreichen und andererseits nur die sinnvoll notwendige Farbmenge auf den Druck aufzubringen.

Es ist weiterhin wichtig, dass solche intelligente Druckersysteme einfach auf ihre korrekte Funktion überprüft werden können. Ein weiterer Aspekt der vorliegenden Erfindung zeigt eine Möglichkeit auf, wie die korrekte Funktion eines derartigen farbechten Druckers periodisch überprüft werden kann.

Im folgenden wird die Erfindung anhand der Zeichnung näher erläutert. Es zeigen:

Fig. 1 ein Prinzip-Blockschema eines Ausführungsbeispiels des erfindungsgemässen Digitaldruckers,

Fig. 2 ein Blockschema der Profilierungsfunktion des Digitaldruckers,

Fig. 3 ein Blockschema einer automatischen Profilauswahlfunktion,

Fig. 4 ein Blockschema einer automatischen Profilverifikationsfunktion,

Fig. 5 ein Blockschema einer Verifikationsfunktion für Sonderfarben,

Fig. 6 ein Blockschema einer Prüfungsfunktion für Standardbedingungen,

Fig. 7 ein Blockschema einer Eintestfunktion für die optimale Farbmenge,

Fig. 8 ein Blockschema einer Funktion zur Berechnung von Profilen für nasse und getrocknete Farben,

Fig. 9 ein Blockschema einer alternativen Funktion zur Berechnung von Profilen für nasse und getrocknete Farben und

Fig. 10    ein Blockschema einer Kalibrierungsfunktion.

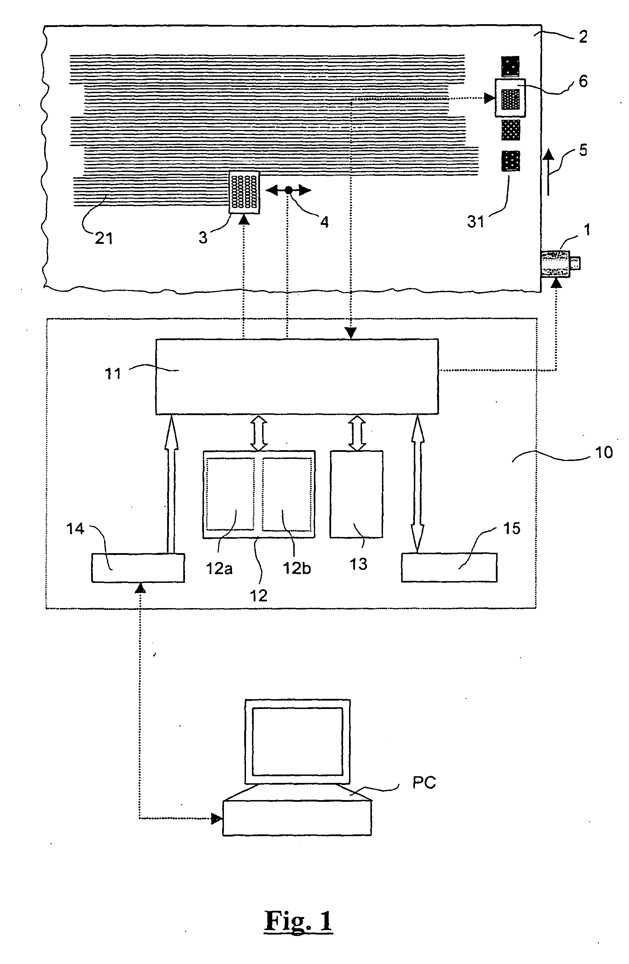

In der Fig. 1 sind der Übersichtlichkeit halber nur die für die vorliegende Erfindung relevanten Komponenten des erfindungsgemässen Digitaldruckers dargestellt. Man erkennt eine typischerweise durch Walzen realisierte Transportvorrichtung 1 für zu bedruckendes Substrat (Papier) 2, einen mit einer grösseren Anzahl von Einzeldüsen ausgestatteten Druckkopf 3, einen nur durch einen Doppelpfeil 4 symbolisierten Antrieb zur Verstellung des Druckkopfs 3 quer zur Vorschubrichtung 5 des Papiers 2, einen Spektralmesskopf 6 und eine digitale Steuerung 10. Letztere umfasst eine rechnerbasierte zentrale Steuereinheit 11, einen Programmspeicher 12, einen Datenspeicher 13, eine PC-Schnittstelle 14 und eine Benutzerschnittstelle 15. Über letztere kann die Steuerung 10 in an sich bekannter Weise Eingaben von einem Benutzer entgegennehmen und z.B. optische oder akustische Informationen an den Benutzer ausgeben. Über die PC-Schnittstelle 14 können dem Digitaldrucker bzw. seiner Steuerung 10 Druck- oder andere Daten (z.B. Profile) von einem angeschlossenen Rechner PC zugeführt werden.

Die Steuereinheit 11 führt die im Programmspeicher 12 befindlichen gerätetypische Steuerungsprogramme 12a aus und steuert dabei in an sich bekannter Weise den Druckkopf 3, dessen Antrieb 4 und die Transportvorrichtung 1 für das zu bedruckende Papier 2. Die Steuerungsprogramme 12a enthalten auch ein an sich bekanntes Farbmanagement-Modul, welches anhand von im Datenspeicher 13 abgelegten oder mit den Druckdaten oder separat vom angeschlossenen externen PC zugeführten Ausgabeprofilen eine Transformation der Druckdaten in den Druckerfarbraum durchführt und dadurch die farbrichtige Druckausgabe bewirkt.

Die Steuereinheit 10 steuert ferner auch den Spektralmesskopf 6 und übernimmt und verarbeitet die vom Spektralmesskopf erzeugten digitalen Messwerte.

Ein geeigneter spektraler Messkopf mit der zugehörigen Elektronik, um die elektrischen Messsignale in entsprechende digitale Messwerte zu verarbeiten, ist z.B. in der EP-A-1041372 beschrieben.

In dieser Allgemeinheit entspricht der dargestellte Digitaldrucker dem Stand der Technik, wie er z.B. durch das Dokument US-A 2002/0080373 repräsentiert ist. Die erfindungsgemässen Unterschiede liegen einerseits in der Anordnung des Spektral- (oder Farb-)Messkopfs 6 und anderseits und vor allem in neuen Funktionalitäten des Digitaldruckers, welche durch spezielle, im Programmspeicher 12 abgelegte Software 12b implementiert sind.

Color Management Systeme zur Kontrolle von Druckern sind heute typischerweise in der folgenden Art realisiert. Ein Computer gibt an einen Drucker ein 2-dimensionales Testchart aus, das eine representative Anzahl von Farben aus dem druckbaren Farbraum enthält, die typischerweise in RGB oder CMYK Koordinaten definiert sind. Das Testchart wird danach mit einem Farbmessgerät ausgemessen. Dabei wird aus Komfortgründen oft ein automatisch xy-scannendes Farbmesssystem wie z.B. das Spectrolino / SpectroScan System der Firma Gretag-Macbeth AG verwendet. Aus den Beziehungen der bekannten RGB bzw. CMYK Werte und den gemessenen farbmetrischen Werten dieses Testcharts werden darauf durch mathematische Umformungen und Interpolationen sogenannte Farbprofile (z.B. ICC Profile) errechnet. Analog können für Eingabegeräte wie Kameras oder Scanner ebenfalls ICC Profile erstellt werden. In einem typischen Arbeitsfluss werden in der Druckvorstufe PDF Dateien mit integrierten Profilen erstellt. Die integrierten Profile beschreiben, wie die integrierten Bilder und die Linenart bzw. der Text korrekt farblich auszugeben sind. Die für das Ausgabegerät (z.B. den Digitaldrucker) erzeugten Profile können dann dazu benutzt werden, auf dem Drucker auszugebende Bilder oder Sonderfarben farblich korrekt darzustellen.

Derartige Systeme sind in einer grossen Vielfalt realisiert worden. Ein Beispiel für eine Anwendung, die Druckerausgabeprofile nach dem ICC Standard berechnen kann, ist das System ProfileMaker der Firma Gretag-Macbeth AG. Da die Profilierung eines Druckers nach einem derartigen Verfahren durch die grosse Anzahl von Farben, die ausgemessen werden muss, relativ zeitaufwändig und fehlerbehaftet ist, liegt es nahe, die Farbmessung weiter zu automatisieren und möglichst bereits in das Ausgabegerät direkt zu integrieren. Eine typische Ausgestaltung eines derartigen Systems ist zum Beispiel in US-A 2002/0080373 beschrieben. Dabei wird die in einem Inkjet Drucker ohnehin vorhandene Bewegung des Druckkopfes quer zur Papierlaufrichtung ausgenutzt, um Testcharts, die auf dem Drucker zum Zwecke des Color Management ausgegeben werden, direkt beim Druck oder zeitversetzt auszumessen. Ein System wie in diesem Dokument aufgezeigt ist aber auch mit erheblichen Nachteilen behaftet. Der erste wesentliche Nachteil dieser Ausgestaltung der Messeinrichtung liegt darin, dass eine zusätzliche Masse mit dem Druckkopf mitbewegt werden muss. Dies wirkt sich negativ auf die Druckgeschwindigkeit und / oder auf die Systemkosten aus. Die Antriebsmotoren müssen entsprechend verstärkt werden. Die Farbmessung wird durch die hohen Beschleunigungskräfte unzuverlässiger. Die zusätzlichen Kopfbewegungen, die notwendig sind, um nach dem Druck die Ausgabe zu messen, verlangsamen zudem die empfundene Ausgabegeschwindigkeit. Ein weiteres Problem besteht darin, dass in dieser Anordnung der Messkopf, der direkt neben dem Druckkopf liegt, potentiell durch Farbnebel verschmutzt wird und bedingt dadurch potentiell fehlerbehaftete Messwerte zurückliefert. Ausserdem ist die Tinte kurz nach dem Druck typischerweise noch nicht vollständig durch den Bedruckstoff absorbiert bzw. getrocknet. Aus diesem Grund werden sich die farbmetrischen Werte noch erheblich ändern. Die nachfolgend beschriebene erfindungsgemässe Anordnung eines spektralen oder farbmetrischen Messkopfes zur Datenerfassung löst diese Problematik.

In der erfindungsgemässen Anordnung nach Fig. 1 wird der spektrale / farbmetrische Messkopf 6 an einer festen Position (vorzugsweise am Rand, an dem das Papier 2 im Drucker angeschlagen wird) irgendwo in Laufrichtung des Papiers nach der durch die Position des Druckkopfs 3 definierten Druckzeile 21 positioniert. Der Messkopf muss dabei nicht unbedingt auf Höhe des Druckkopfes 3 montiert werden. Es ist sogar vorteilhaft, den Messkopf 6 in einem gewissen Abstand (z.B. 10 cm) in Papierlaufrichtung gemessen vom Druckkopf 3 entfernt zu positionieren. Da sich der Messkopf 6 in dieser Anordnung nicht bewegen kann, ist es nun notwendig, die für die Berechnung eines ICC Profiles benötigten Messfelder 31 in einer Reihe (d.h. pro gedruckter Zeile ein Messfeld 31) zu positionieren. Diese Messfelder werden dann typischerweise an dem Rand, an dem das Papier 2 angeschlagen wird, ausgedruckt. Alle Messfelder 31, die zur Erstellung des Profiles benötigt werden, werden dann in dieser Weise ausgegeben und durch den Messkopf 6 spektralfotometrisch oder farbmetrisch ausgemessen. (Die für die Ausgabe der Messfelder erforderlichen Druckdaten sind Bestandteil der Software 12b oder können auch vom angeschlossenen PC zugeführt werden.) Nach dem Ausmessen aller Messfelder 31 werden die entsprechenden Messwerte dann einem in der im Programmspeicher 12 befindlichen Software 12b enthaltenen, an sich bekannten Profilberechnungsmodul übermittelt. Dieses Rechenmodul erzeugt ein Ausgabegeräteprofil (z.B. nach dem ICC Standard), welches intern im Datenspeicher 13 des Druckers (oder ggf. auch extern im angeschlossenen PC) gespeichert wird und dann später in an sich bekannter Weise zur farbrichtigen Ausgabe von Bildern und Sonderfarben in diesem Drukker verwendet wird. Als Profilberechnungsmodul kann mit Vorteil die schon erwähnte Software "Profile Maker" der Firma Gretag-Macbeth AG eingesetzt werden.

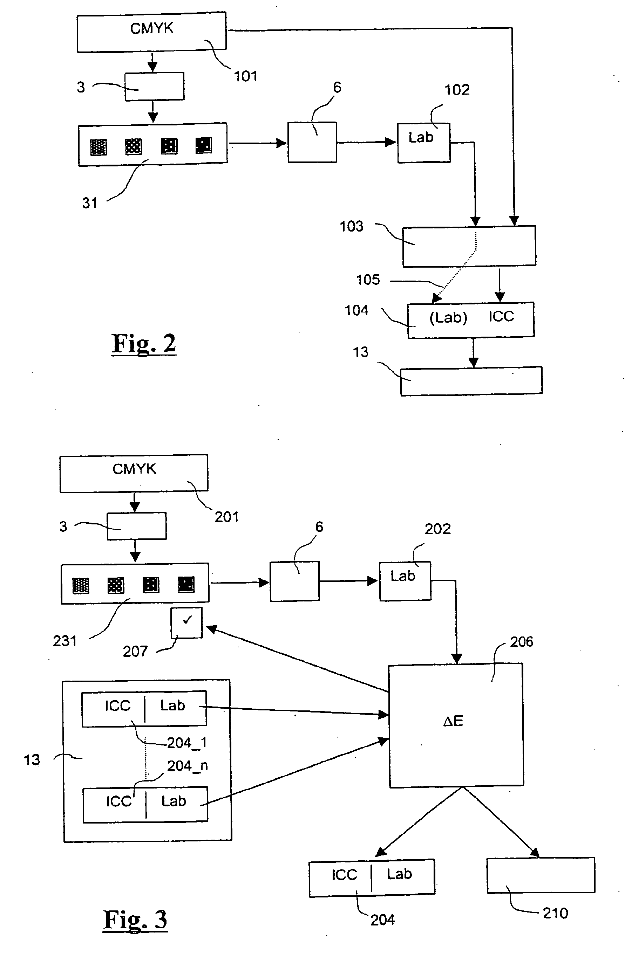

Die Fig. 2 fasst die vorstehenden Abläufe zusammen: Mit 101 sind die Druckdaten (z.B. CMYK) der über den Druckkopf 3 auszugebenden Messfelder 31 bezeichnet. Die Farbmesswerte (z.B. Lab) der Messfelder 31 sind durch den Kasten 102 symbolisiert. Die Druckdaten 101 und die entsprechenden Farbmesswerte 102 gehen in das Profilberechnungsmodul 103, welches daraus das Ausgabeprofil 104 berechnet, das dann im Datenspeicher 13 abgespeichert wird. In das Ausgabeprofil 104 können bei Bedarf auch die Farbmesswerte 102 ausgewählter oder aller Messfelder 31 integriert werden. Dies kann in an sich bekannter Weise z.B. in einem sog. Private Tag des Profils erfolgen. Die Integration der Farbmesswerte 102 ist durch den strichlierten Pfeil 105 symbolisiert. Die in das Profil 104 integrierten Farbmesswerte werden zum Beispiel in der weiter unten erläuterten Weiterbildung der Erfindung benötigt.

In einigen Anwendungen, z.B. begründet durch den Wunsch Papier zu sparen, ist es wünschenswert, auf einer Zeile mehrere Messfelder auszudrucken. Für diesen Fall ist der nachstehend erläuterte erfindungsgemässe alternative Systemaufbau geeignet, welcher die Vorteile eines statisch montierten Messkopfes mit den Vorteilen einer zweidimensionalen Messung kombiniert.

Gemäss diesem Ausführungsbeispiel der Erfindung ist das Farbmessgerät als Zeilenspektrometer ausgebildet. Ein derartiges Farbmessgerät besitzt typischerweise in der Beleuchtung eine Anzahl von monochromatischen bzw. schmalbandigen Lichtquellen (z.B. 16 verschiedenfarbige LED's), mit deren Licht eine zeilenförmige Fläche auf dem Papier sequentiell beleuchtet wird. Das Licht wird dabei über ein optisches System in einem 45° Winkel auf das Papier gebracht. Im Nullgradwinkel wird dann die beleuchtete zu messende Zeile durch ein optisches System auf einen Zeilensensor (z.B. CCD Sensor) abgebildet. Indem nacheinander das Papier mit 16 verschiedenen Farben beleuchtet wird und die entsprechenden Signale auf dem Sensor detektiert und ausgewertet werden, steht durch dieses Messprinzip für jeden Punkt der Zeile ein (diskretes) Spektrum zur Verfügung.

Alternative Bauformen eines solchen Zeilenspektrometers sind die sogenannten Imaging Spektralfotometer. Dabei wird die zu messende Zeile im Bild durch ein optisches System auf einen 2-dimensionalen Detektor abgebildet. In der einen Dimension des Detektors wird das Bild dabei örtlich (spatial) aufgelöst, in der zweiten Dimension entsprechend den Wellenlängen. Die Beleuchtung in einem derartigen Imaging Spektralfotometer wird typischerweise als Weisslichtbeleuchtung ausgeführt.

Sowohl mit mehreren monochromatischen Lichtquellen ausgerüstete Zeilenspektrometer als auch Imaging Spektralfotometer sind wohlbekannt und bedürfen deshalb für den Fachmann keiner näheren Erläuterung.

Unabhängig von der konkreten Bauform des verwendeten Zeilenspektrometers wird programmtechnisch durch die Software 12b die folgende Funktionalität erzeugt:

Der Drucker druckt ein 2-dimensionales Messchart an irgend einer Stelle des Papiers aus. Das Zeilenspektralfotometer ist dabei (quer zur Papiervorschubrichtung) exakt an derselben Stelle, an welcher das Chart ausgedruckt wird, unbeweglich montiert. Durch den Papiervorschub wird das Chart unter dem Zeilenspektralfotometer bewegt.

Dadurch ist es möglich, die gesamten farbmetrischen Messdaten des 2-dimensionalen Charts messtechnisch zu erfassen. Sobald die Messdaten erfasst sind, werden die Messdaten in ein Profilierungsmodul eingespeist und die entsprechenden Ausgabeprofile (z.B. nach dem ICC Standard) berechnet. Diese ICC Profile werden dann bei der Ausgabe der Bilder und Sonderfarben angewendet, um eine farbrichtige Ausgabe zu erzeugen.

In einem weiteren Aspekt dieser Erfindung wird aufgezeigt, wie ein eingebautes Farbmessgerät, unabhängig davon, ob es sich um einen fix montierten Einzelmesskopf, einen fix montierten Zeilenmesskopf oder einen bewegten Einzelmesskopf oder bewegten Zeilenmesskopf handelt, dazu verwendet werden kann, den Profilierungsarbeitsfluss wesentlich zu vereinfachen. Typischerweise wird nämlich für jeden Substrattyp (Papier), Tintentyp etc. ein unabhängiges Geräteprofil erzeugt. Dies ist notwendig, weil die Farbausgabe auf unterschiedlichen Papieren und mit unterschiedlichen Farbtinten bei den selben Einstellungen der Druckparameter sehr unterschiedlich ausfällt. Es wäre daher äussert vorteilhaft, wenn der Drucker selber den aktuell verwendeten Papiertyp selbst erkennen könnte und dadurch das entsprechende Drukkerprofil ohne Benutzerhilfe anwählen würde.

Um diesen vorteilhaften Aspekt der Erfindung zu realisieren, wird folgendes Vorgehen durch die Software 12b programmtechnisch implementiert (Fig. 3):

In einem ersten Schritt wird der Drucker nach einem der vorgängig beschriebenen Verfahren profiliert und dabei für jede gängige Systemkonfiguration (Tinten-Typen, Papier-Typen etc.) ein unabhängiges Geräteprofil (z.B. ICC Profil) 204_1 ... 204_n erzeugt und im Datenspeicher 13 abgelegt. In jedem Profil werden zusätzlich zu den eigentlichen Profilierungsdaten die Farbmesswerte (oder die entsprechenden Spektralmesswerte) einer Teilmenge der Messfelder oder alternativ aller Messfelder abgespeichert. Die Messfelder, deren Farbmesswerte in den Profilen gespeichert werden, werden im folgenden zur Unterscheidung von den Messfeldern, die zur Profilbildung herangezogen werden, als Testfelder bezeichnet. Diese speziellen Testfelder müssen dabei immer gleich (d.h. ohne Anwendung eines Farbprofiles oder ohne Anpassung der Farbmenge oder der Druckgeschwindigkeit) ausgegeben werden. Die Speicherung kann z.B. in einem ICC Profil dadurch passieren, dass die Messdaten in einem sogenannten Private Tag des Profils gespeichert werden. Alternativ können auch zusätzliche Testfelder ausgedruckt werden und die Messdaten dieser zusätzlichen Testfelder im Profil mitgespeichert werden. Die Messfeldtypen, die hierzu gewählt werden, sind typischerweise identisch zu den Messfeldtypen in einem Offsetdruck-Kontrollstreifen. Die Testfelder, deren Daten abgespeichert werden, sollten Messfelder sein, die sich auf unterschiedlichen Papieren farblich stark verändern. Typischerweise werden dazu Rasterfelder der Farben CMYK oder Volltonfelder dieser Farben verwendet. Zusätzlich kann z.B. noch der Messwert des Papierweiss mitgespeichert werden ("Weissfeld", "Papierweiss"). Durch die Abspeicherung dieser typischen Messwerte von ausgesuchten Messfeldern (Testfeldern) entsteht quasi ein Fingerabdruck des Verhaltens des Druckers und der Farben auf einem typischen Papier.

Die automatische Profilwahl läuft dann nach folgendem Verfahren ab, das ebenfalls in der Software 12b enthalten bzw. durch diese implementiert ist:

Der Drucker gibt zuerst diese wenigen Testfelder 231, die ein Profil identifizieren, auf dem Papier aus. Die zugrundeliegenden Druckdaten sind mit 201 bezeichnet. Im Minimalfall wird nur ein Weissfeld ausgegeben, also überhaupt nichts gedruckt. Als Testfeld wird in diesem Minimalfall also nur das Papierweiss verwendet, die Charakterisierung besteht nur aus der Messung des Papiers. Danach werden die Testfelder mit dem eingebauten Farbmessgerät 6 spektral und/oder farbmetrisch ausgemessen. Danach werden in einem Evaluationsmodul 206 die spektralen bzw. farbmetrischen Differenzen zu den entsprechenden Messwerten der Testfelder aller im Datenspeicher 13 des Druckers (oder im angeschlossenen Rechner) gespeicherten Profile 204_1 ... 204_n berechnet. Dazu werden die entsprechenden Messwerte aus dem Private Tag des jeweiligen ICC Profils ausgelesen und die farbmetrischen Differenzen zu den aktuellen Messwerten der entsprechenden Messfelder erzeugt. (Dies kann z.B. eine farbmetrische Differenz $\Delta E$ gemäss CIELAB Formel sein). Die farbmetrischen Differenzen $\Delta E$ werden über alle Testfelder aufsummiert, wobei die Summe sodann ein Farbmass ergibt, das die Anwendbarkeit eines ICC Profils auf dieses Substrat (in Kombination mit den jeweils eingesetzten Farbtinten) definiert und bestimmt. Im Idealfall ist die aufsummierte farbmetrische Differenz $\Delta E$ im Falle des passenden Profils nahezu 0 dE CIELAB, wohingegen die Abweichung der aufsummierten $\Delta E$ Differenzen bei nicht passenden Profilen relativ hohe $\Delta E$ Werte erreicht. Sollte beim Ausdruck der Messfelder eines der im Drucker oder Computer gespeicherten Profile 204_1 ... 204_n (durch eine hinreichend kleine aufsummierte farbmetrische Differenz $\Delta E$) als passend erkannt worden sein, wird dieses Profil automatisch als aktives Profil 204 im Arbeitsfluss (im Computer oder direkt im Drucker) gesetzt und dann später für die farbrichtige Druckausgabe verwendet. Sollte kein passendes Profil gespeichert sein, würde der Drukker entweder eine Fehlermeldung ausgeben oder automatisch in den Profilierungsmodus (Block 210) wechseln und dann wie anhand der Fig. 2 erläutert ein passendes Profil erzeugen. Diese Ueberprüfung kann wahlweise automatisch (z.B. bei jedem Ausdruck) oder durch eine Benutzereingabe (Benutzerschnittstelle 15) am Drucker ausgelöst werden.

Um dem Anwender eine Rückmeldung zu geben, ob das Profil geprüft worden und passend ist, wird gemäss einem weiteren Teilaspekt der Erfindung das System derart ausgebaut, dass nach erfolgreicher Prüfung der Gültigkeit der Messwerte der Testfelder eine zusätzliche Marke 207 im Teststreifen (Gesamtheit der Testfelder) ausgegeben wird, die die Gültigkeit des Profils dem Benutzer anzeigt. Diese Marke soll typischerweise in der Nähe der ausgedruckten Testfelder ausgegeben werden, damit der Benutzer unmittelbar die Marke dem Prüfresultat zuordnet. Dabei kann es sich sowohl um eine graphische Marke (Häkchen o.ä.) oder um eine Textmarke (z.B. "Profil geprüft am tt.mm.jj") handeln.

Der nachstehend erläuterte Aspekt der Erfindung zeigt, wie die Korrektheit bzw. Anwendbarkeit eines Profils durch Messungen der Druckausgabe verifiziert werden kann, ohne dass wie im vorgängigen Abschnitt beschrieben ein Teststreifen ausgegeben wird.

Typischerweise werden an den Digitaldrucker RGB oder CMYK Druckdaten übermittelt. Für das folgende wird davon Gebrauch gemacht, dass diese RGB bzw. CMYK Werte mit Hilfe des Ausgabeprofils in farbmetrische Sollwerte für den auszugebenden Bildpunkt umgerechnet werden können. Diese Sollwerte können dann mit den gemessenen Farbmesswerten verglichen werden. Dabei ist aber zu berücksichtigen, dass ein eingebauter Messkopf normalerweise eine Apertur aufweist, die wesentlich grösser als die Bildpunkte in der Ausgabe ist (z.B. 1-5 mm Durchmesser).

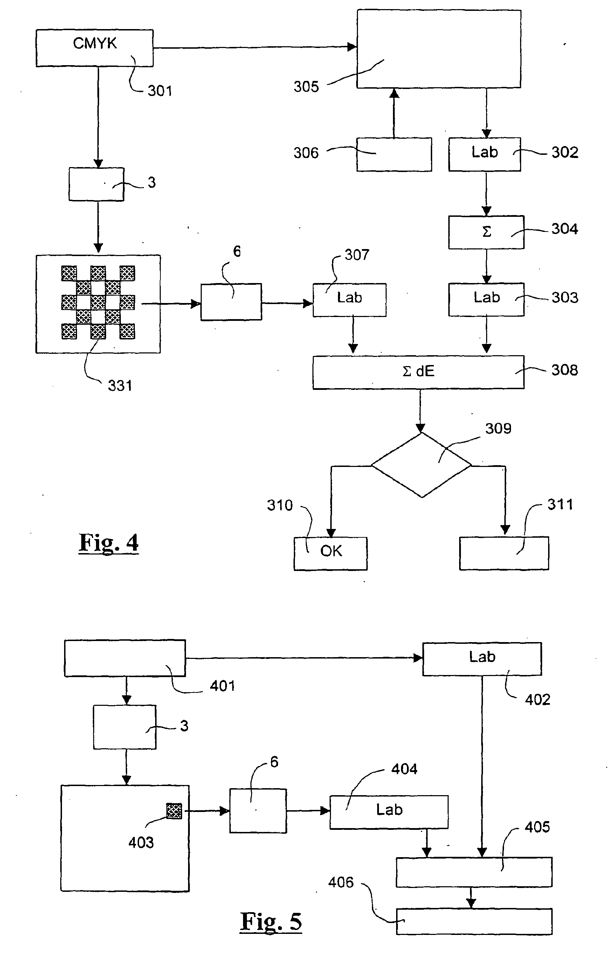

Die Kontrolle der Druckausgabe erfolgt nun auf folgende Weise (Fig. 4):

Das Farbmessgerät 6 misst einen passenden Testdruck an verschiedenen vorgegebenen Messstellen 331. Diese Messstellen können schachbrettartig über den Ausdruck verteilt sein. Jede andere Anordnung der Messstellen ist aber auch möglich. Die Software 12b im Programmspeicher 12 des Druckers ermittelt für die zu überprüfenden Messstellen 331 die farbmetrischen Sollwerte 303, indem es die errechneten farbmetrischen Werte 302 der einzelnen Druckpunkte, die sich innerhalb der Apertur einer Messung befinden, in einer Mittelungsstufe 304 mittelt. Die Berechnung der farbmetrischen Werte 302 der einzelnen Druckpunkte erfolgt aus den RGB bzw. CMYK Werten 301 durch Transformation 305 in den LAB Farbraum unter Anwendung des aktiven Ausgabeprofils 306. Diese gemittelten LAB Werte bzw. Sollwerte 303 dienen dann als Referenzwerte für die Messung des Ausgabebildes an den einzelnen Messstellen 331.

In einem weiteren Schritt werden die farbmetrischen Differenzen der Messwerte 307 des Ausdrucks zu den errechneten Sollwerten 303 des Ausdrucks an den einzelnen Messstellen 331 berechnet und gemittelt. Der errechnete mittlere dE Fehler 308 ist dann das Mass für die Abweichung der aktuellen Druckausgabe von der gewünschten Druckausgabe. Falls dieser mittlere Fehler 308 unter einer vorgegebenen Fehlergrenze liegt (Prüfung 309), wird die Druckausgabe als gültig deklariert (OK-Signalisierung 310). Andernfalls wird der Benutzer gewarnt oder wahlweise das System automatisch neu profiliert (Profilierung 311).

Im nachstehend erläuterten Aspekt der Erfindung wird aufgezeigt, wie das eingebaute Farbmessgerät nicht nur zur Kontrolle von mit den üblichen Standardfarben gedruckten Sujets, sondern auch zur Kontrolle von Sonderfarbenflächen verwendet werden kann.

Digitale Drucker sind heute oftmals in der Lage, neben den CMYK Farben auch sogenannte Sonderfarben auszugeben. In sogenannten "Named Profiles" kann definiert werden, wie ein Druckausgabesystem Sonderfarben (die typischerweise durch Farbnamen wie z.B. "Pantone 405C" bezeichnet sind) in farbmetrische Koordinaten umwandeln kann. Derartige "Named Profiles" können in PDF Dateien eingebettet werden. Eine alternative Art, die Konversionstabellen von Farbnamen in farbmetrische Werte an den Drucker zu übermitteln, besteht darin, eine XML kodierte Umwandlungstabelle (wie z.B. im CxF Datenaustauschformat der Firma Gretag-Macbeth AG definiert) in eine PDF Datei einzubetten und damit mit der PDF Datei an den Drucker bzw. Druckertreiber zu übermitteln.

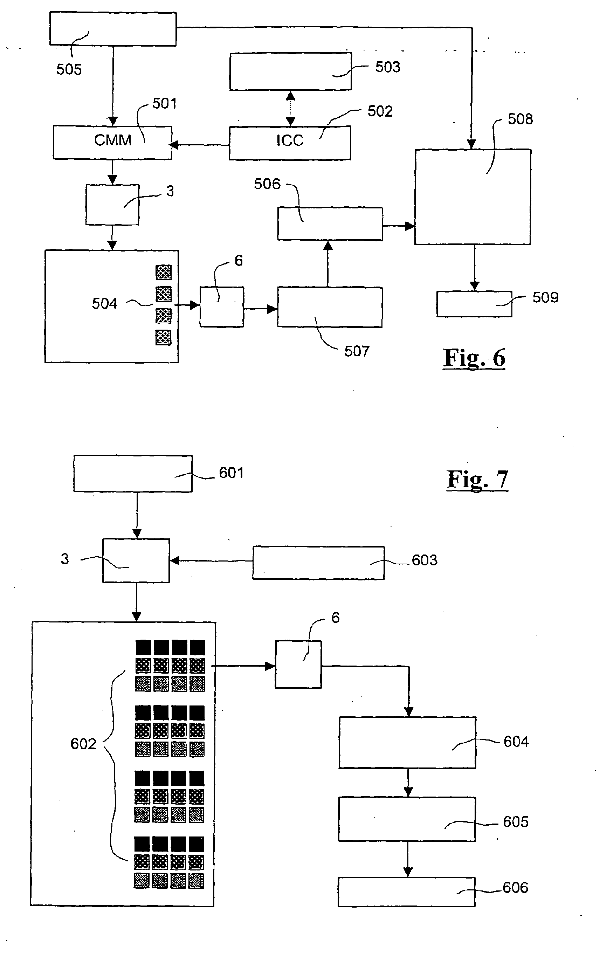

Sobald der Digitaldrucker nun eine Sonderfarbe ausgeben muss, wird der folgende, in der Software 12b programmtechnisch implementierte Ablauf gestartet (Fig. 5):

Mit Hilfe des "Named Profiles" 401 oder der in die PDF Datei eingebetteten CxF Datei wird die auszugebende Sonderfarbe in einen farbmetrischen Wert transformiert. Jeder Sonderfarbe in der Druckausgabe kann auf diese Art ein farbmetrischer Referenzwert 402 zugeordnet werden. Dieser farbmetrische Referenzwert wird für die Messung hinterlegt. Die Ueberprüfung der Sonderfarbe mit dem eingebauten Messgerät 6 erfolgt dann nach folgendem Prinzip:

An denjenigen Stellen, an denen die Sonderfarbe als Fleck von geeigneter Grösse ausgegeben wird, wird durch ein eingebautes farbmetrisches XY Messsystem die Sonderfarbe gemessen und mit dem Referenzwert verglichen. Alternativ kann auch am Rand des Blattes ein Testfeld 403 von z.B. 5*5 mm$^2$ Grösse in der selben Sonderfarbe ausgegeben und mit einem fix oder beweglich montierten Messkopf 6 an dieser Stelle ausgemessen werden. Falls der theoretisch bestimme Referenzwert 402 vom aktuellen Farbmesswert 404 nicht abweicht bzw. die Abweichung kleiner als eine vorgegeben Schwelle (z.B. 1.0 dE CIELAB) ist (Vergleich 405), gilt die Farbe als korrekt gedruckt. Falls sämtliche Farben korrekt gedruckt worden sind, signalisiert das System dem Benutzer die Korrektheit der Druckausgabe. Die Signalisation kann z.B. dadurch erfolgen, dass auf dem Ausdruck eine bestimmte Marke 406 ausgegeben wird. Alternativ kann die Signalisation auch über die Benutzerschnittstelle 15 des Druckers erfolgen oder es kann auch über die Drucker/PC Schnittstelle 14 eine Meldung auf den Bildschirm des angeschlossenen Rechners PC ausgegeben werden.

In vielen Anwendungen, speziell in der Herstellung sogenannter "Proofs", und im speziellen bei der Herstellung von Remote Proofs, ist es ausserordentlich wichtig, dass jeder Proof innerhalb einer bestimmten vorgegebenen Toleranz ausgedruckt ist. Um dies zu erreichen werden heute typischerweise Druckkontrollstreifen ausgegeben. Die Messwerte eines Druckkontrollstreifens (Dichten, Tonwertzunahmen, farbmetrische Messwerte) müssen sich dabei innerhalb eines bestimmten Toleranzbereichs befinden um zu beweisen, dass der Proof nicht von vorgegebenen Standardausgabebedingungen abweicht. Typischerweise werden die Druckkontrollstreifen heute von einem externen Messgerät (zum Beispiel einem spektralen Handmessgerät wie dem Gerät SpectroEye von Gretag-Macbeth AG) ausgemessen.

Der nachfolgend erläuterte Aspekt der Erfindung zeigt auf, wie ein eingebautes spektrales / farbmetrisches Messgerät vorteilhaft zur Prüfung des Einhaltens der Standardbedingungen verwendet werden kann und wie die Erreichung der Standardbedingungen für den Benutzer signalisiert bzw. dokumentiert werden kann. Dazu sind in der Software 12b folgende Funktionsabläufe implementiert (Fig. 6):

Wahlweise wird in einem ersten Schritt das in Verbindung mit dem Farbmanagementmodul 501 zu verwendende Profil 502 gemäss der im Zusammenhang mit Fig. 4 beschriebenen Vorgehensweise geprüft (Block 503). Danach wird in einem zweiten Schritt ein zusätzlicher Testkeil mit vordefinierten Testfeldern 504 ausgegeben. Die typischerweise farbmetrisch oder spektral definierten Testfelder 504 des Testkeiles werden unter Beizug des (ggf. zuvor verifizierten) ICC Profils 502 auf dem Papier ausgegeben. Von diesen Testfeldern 504 sind typischerweise die Volltondichten oder die farbmetrischen Messwerte bei Volltonfeldern oder die Tonwertzunahmewerte bzw. die farbmetrischen Messwerte bei Rasterfeldern als digitale Vorgabewerte 505 bekannt. Das eingebaute Messgerät 6 misst die Testfelder 504 nach dem Druck aus, und aus den Messwerten werden die absoluten Dichten, Tonwertzunahmewerte oder farbmetrischen aktuellen Werte 506 dieser Testfelder 504 berechnet (Berechnungsblock 507). Eine Vergleichsstufe 508 vergleicht dann die berechneten aktuellen Werte 506 mit den digitalen Vorgabewerten 505. Eine innerhalb der zulässigen Toleranz liegende oder diese überschreitende Abweichung von den Vorgabewerten 505 kann wiederum wahlweise mittels einer graphischen Marke 509 oder einer entsprechenden Textmarke, die nahe dem Testkeil ausgedruckt wird, dem Benutzer signalisiert werden.

Der folgende weitere Aspekt der Erfindung zeigt eine Möglichkeit auf, wie der eingebaute farbmetrische Messkopf 6 dazu verwendet werden kann, den Druckfarbenverbrauch eines digitalen Druckausgabesystems zu optimieren. Je nach Art des zu bedruckenden Substrates (ungestrichenes Papier, gestrichenes Papier, Kunstdruckpapier u.s.w.) muss ein Digitaldrucker eine unterschiedliche Menge von Druckfarbe zum Ausdruck einer Farbe ausgeben. Dies ist im wesentlichen dadurch bedingt, dass einerseits ein möglichst grosser Farbraum erreicht werden soll und dadurch tendenziell viel Farbe aufgebracht werden muss und anderseits ab einem bestimmten Farbauftrag (abhängig von der Papiersorte) keine wesentliche Vergrösserung des Farbraumes mehr erreicht werden kann und andere störende Effekte auftreten wie z.B. Verwerfung des Papiers durch Feuchtigkeit. Ebenso ist es unsinnig, unnötig viel Farbe zu verschwenden, um den Farbraum nur noch marginal zu erweitern. Mit der nachstehend in Verbindung mit Fig. 7 beschriebenen erfindungsgemässen Funktionalität lässt sich der Digitaldrucker noch weiter verbessern. Die Funktionalität ist ebenfalls durch entsprechende Routinen in der Software 12b implementiert.

Nachdem ein Papierwechsel vorgenommen worden ist (dies kann durch den Benutzer signalisiert oder das eingebaute Farbmessgerät 6 automatisch erkannt werden), wird eine spezielle Eintestprozedur gestartet. In dieser Eintestprozedur werden typischerweise mehrere Messkeile 602 (z.B. je 2 Rasterwerte (30%, 70%) und ein Vollton (100%)) in der Grundfarben CMYK ausgegeben, wobei die zugrundeliegenden Druckdaten mit 601 bezeichnet sind. Die Ausgabe dieser Messkeile wird wiederholt mit verschiedenen Farbmittelmengeneinstellungen 603. Diese Messkeile werden dann für jede Grundfarbe ausgemessen. Für jedes Messfeld eines Messkeils wird darauf die erreichte Farbsättigung bzw. der aufgespannte Farbraum 604 bestimmt. Ein einfaches Verfahren dazu besteht z.B. darin, die "C" Koordinaten des LCh Farbsystems eines

Messkeils einer Farbe zusammenzuzählen. Daraufhin wird in Stufe 605 der Zusammenhang zwischen den erreichten Farbräumen 604 und den zugrundeliegenden Farbmittelmengeneinstellungen 603 analysiert. Wenn sich der erreichte Farbraum 604 bei Steigerung der aufgebrachten Farbmenge (Farbmittelmengeneinstellung 603) nicht mehr wesentlich ändert, ist die optimale Farbmittelmengeneinstellung (Farbmenge) 606 erreicht. Mit dieser gewählten Farbmenge 606 werden dann die Ausdrucke auf diesem Drucker gemacht bzw. der Drucker wird später unter Einhaltung dieser Farbmenge 606 profiliert.

Der nachfolgende Aspekt der Erfindung zeigt auf, wie das in den Digitaldrucker eingebaute Farbmessgerät 6 verwendet werden kann, das sogenannte Nass/Trocken-Problem zu lösen.

Ein typisches Problem, das sich bei der Messung von Farben unmittelbar nach dem Druck stellt, ist das Problem des Vergleichs von Messwerten eines Messfeldes, das unmittelbar nach dem Druck (in feuchtem Zustand) gemessen wurde, mit den farbmetrischen / spektralen Messwerten eines Messfeldes im total getrockneten Zustand. Auf Grund des Trocknungsprozesses sowie anderer Prozesse wie z.B. dem Wegschlagen verändern sich die farbmetrischen Messwerte im Trocknungsprozess. Es sind in der Literatur verschiedene Ansätze bekannt, wie die Messwerte im nassen und trockenen Zustand kompatibel gemacht werden können. Ein Ansatz dazu besteht z.B. in der Messung mit polarisiertem Licht (EP-A zzzzzzz Gretag Case einsetzen!!!)

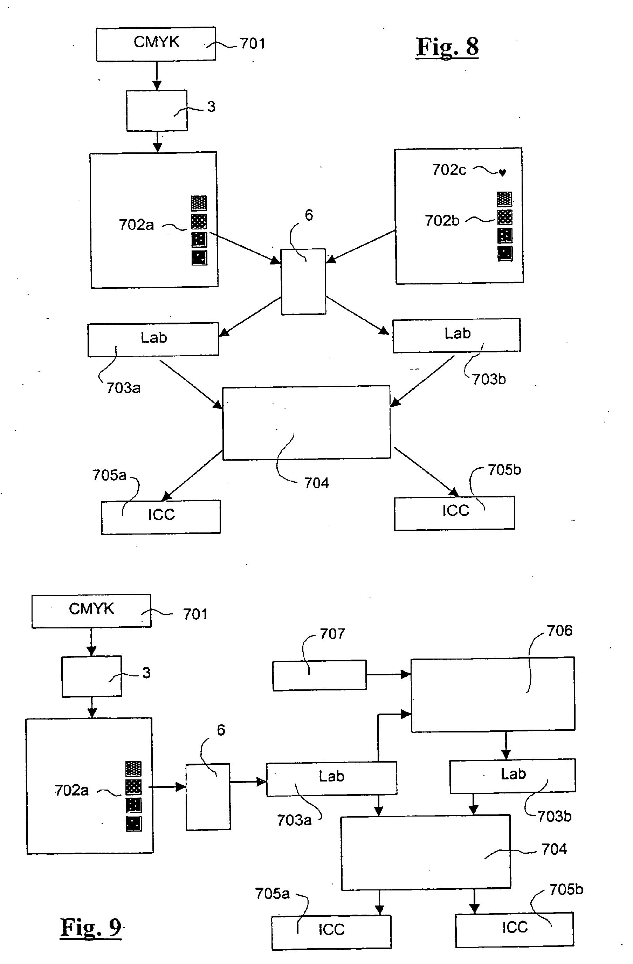

Gemäss diesem weiteren Aspekt der Erfindung wird das eingebaute Farbmessgerät 6 verwendet, um die farbliche Veränderung der Druckfarbe im Trocknungsprozess vorherzusagen und damit von einer Messung der nassen Farbe (die unmittelbar nach dem Druck möglich ist) auf die für den Benutzer wichtige Messung der trockenen Farbe zu schliessen, ohne die Trocknungszeit abwarten zu müssen. Diese ebenfalls durch Routinen in der Software 12b implementierte Funktionalität wird im folgenden anhand der Fig. 8 erläutert.

Zuerst wird der Digitaldrucker in einem ersten Schritt profiliert. Dazu gibt der Drukker ein Testchart in einer der vorgängig beschriebenen Art aus, wobei die zugrundeliegenden Druckdaten mit 701 bezeichnet sind. Der Messkopf 6 erfasst unmittelbar nach dem Druck die Messfelder 702a des Testcharts und erzeugt daraus die entsprechenden Farbmesswerte 703a. Nach vollständiger Datensammlung wird im Profilierungsmodul 704 ein Nass-Geräteprofil 705a berechnet. Dieses Geräteprofil 705a beschreibt daher die Transformation von RGB bzw. CYMK auf den CIELAB Farbraum für nasse Messfelder für die betreffende Papierart.

Nach dem vollständigen Trocknen des Ausdrucks wird der Ausdruck ein zweites Mal in den Drucker eingezogen (dies kann z.B. dadurch passieren, dass das bedruckte Papier ein zweites Mal in den Papierschacht eingelegt wird). Zur Unterscheidung zu den nassen Messfeldern 702a sind die trockenen Messfelder in der Fig. 8 mit 702b bezeichnet. Mit Hilfe des eingebauten Farbmesskopfes 6 erkennt das System, dass es sich um ein bereits bedrucktes Papier handelt. Auf Grund einer wahlweise aufgedruckten Farbmarke 702c, die durch den Farbmesskopf abgetastet wird, kann der Drucker zudem feststellen, welches Profil diesem Ausdruck im nassen Zustand bereits zugeordnet worden ist. Damit wird eine eindeutige Zuordnung zu einem definierten Papier erreicht.

Der Drucker wird nun in einen Modus versetzt, in welchem das eingelegte Testchart lediglich gemessen wird. In diesem zweiten Durchlauf werden daher die Messwerte 703b von allen Messfeldern 702b des Testcharts erfasst. Aus den zugrundeliegenden Druckdaten 701 und den Farbmesswerten 703b wird dann in analoger Weise ein Trocken-Geräteprofil 705b berechnet, das charakteristisch ist für die Umwandlung von CMYK oder RGB Werten in farbmetrische Werte von trockenen Messfeldern. Dieses zweite Profil 705b wird intern im Drucker ebenfalls der betreffenden Papierart zugeordnet.

Die zwei Geräteprofile 705a (trocken) und 705b (nass), die einer Papierart zugeordnet sind, werden nun folgendermassen angewendet:

Wann immer vom Computer her eine Datei zum Ausdrucken übermittelt wird, wird das Profil für die trockenen Messwerte angewendet, um die Farben korrekt auszugeben. Dies wird dadurch begründet, dass der Anwender korrekte Farben im getrockneten Zustand haben will. Wann immer ein RGB oder CMYK Wert in einen CIELAB Wert transformiert werden muss und der Wunsch besteht, einen farbmetrischen Wert zu erhalten, der eine Farbe im nassen Zustand repräsentiert, wird das Profil für die Transformation von nassen Messwerten angewendet. Die Anwendung des Profils für nasse Werte ist insbesondere dann sinnvoll, wenn direkt im Ablauf Messfelder für die Qualitätssicherung bzw. Ueberprüfung der korrekten Anwendung der Profile ausgemessen werden sollen, wie in diversen obigen Anwendungen aufgezeigt.

In all denjenigen Anwendungen, wo es nicht gewünscht ist, das Testchart ein zweites Mal in den Drucker einzuführen, kann alternativ auch nach folgendem Verfahren vorgegangen werden (Fig. 9):

Die Messwerte 703b des trockenen Bogens werden aus den Messwerten 703a des nassen Bogens durch ein physikalisches Modell 706 berechnet. Der Benutzer gibt in diesem Fall an, in welche Klasse 707 (gestrichen, ungestrichen, matt, Kunstdruck u.s.w.) das Papier gehört. Dabei müssen für das Modell 706 hauptsächlich zwei Parameter berücksichtigt werden. Einerseits die Veränderung des Oberflächeneffekts. Dies kann typischerweise dadurch modelliert werden, dass zu jedem Reflexionswert jedes Messwerts der nassen Probe eine kleiner Reflexionswert (typischerweise 1%...4%) addiert wird. Als weitere Korrektur zur Berücksichtigung des Wegschlagens ins Papier empfiehlt es sich oft, die durch das Papier zusätzlich eingebrachte Streuung zu berücksichtigen. Die entsprechenden Formeln sind allgemein bekannt (siehe Modelle von Kubelka /Munk und Hoffmann / Schmelzer). Es ergibt sich daher für jeden Reflexionswert der trockenen Messfelder die folgende Korrekturformel:

$$R \text{ trocken} = f\,(\,R \text{ nass}, S\,) + O$$

wobei O typischerweise eine Konstante ist, die in allen Wellenlängen für alle Farben gleich und charakteristisch für den Oberflächeneffekt ist und S ein konstanter oder wellenlängenabhängiger Parameter ist, der das Streuverhalten des Papiers charakterisiert.

Die für die Messwertekorrektur benötigten Werte S und O hängen vom verwendeten Papiertyp ab und sind typisch für ein Papier. Der Drucker wird daher in einem weiteren Schritt (basierend auf der Benutzervorgabe des Papiertyps) die entsprechenden S und O Werte aus einer Datenbank für die Papierklasse auslesen und mit Hilfe des Modells 706 sämtliche Reflexionswerte in Messwerte 703b eines trockenen Bogens umrechnen.

Ausgehend von diesen synthetischen Messwerten 703b wird dann wiederum das Profil 705b für den trockenen Bogen gerechnet. Danach ist das weitere Vorgehen wieder wie im vorhergehenden Fall, in welchem die zwei Profile 705a und 705b (für nass und trocken) einem Papiertyp zugewiesen und wie im vorhergehenden Fall angewendet werden.

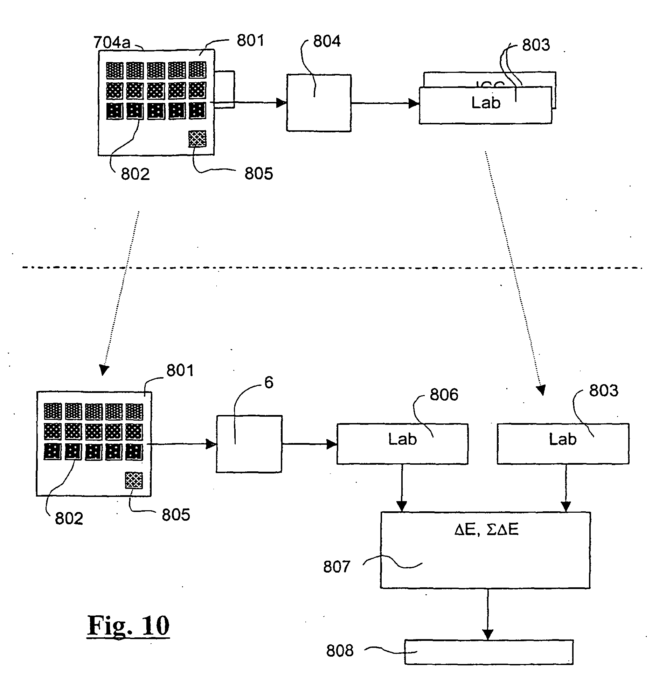

Der nachfolgend anhand der Fig. 10 erläuterte letzte Aspekt der vorliegenden Erfindung zeigt auf, wie der Digitaldrucker periodisch auf die Einhaltung einer Messtoleranz und daher auf Einhaltung einer maximalen Abweichung zu einem Standard überprüft werden kann.

Zunächst wird geeigneten Orts ein Kalibrations-Chart 801 mit einer Palette von Messfeldern 802 in Farben, die sich möglichst über den ganzen Farbraum verteilen, ausgedruckt. (Dies könnten z.B. 12 gesättigte Farben aus dem Farbkreis sowie Schwarz, Grau und Papierweiss sein.) Die farbmetrischen Werte 803 dieser Messfelder 802 werden dann in einem zentralen Eichlabor mit Hilfe eines Spektralfotometers 804 erfasst. Ausserdem wird das Kalibrations-Chart 801 mit einem Farb-Code 805 zur Identifikation versehen. Vorzugsweise ist das Kalibrations-Chart 801 so aufgebaut, dass zwischen den farbigen Messfeldern periodisch Weiss-Felder eingeflochten sind, welche dazu dienen, mit Hilfe einer Zwischenkalibration auf Papierweiss die Genauigkeit des System zu erhöhen.

Das ausgedruckte Kalibrations-Chart 801 und die zugehörigen Messdaten 803 werden an den Benutzer für die Kontrolle der farbmetrischen Korrektheit seines Druckers übermittelt. Der Benutzer lädt die Messdaten 803 auf den Drucker (über den PC oder über eine geeignete Schnittstelle am Drucker selbst). Diese Messdaten 803 stellen den Referenzwert dar.

Danach wird das Chart 801 in den Papierschacht des Druckers eingelegt. Der Drucker erkennt automatisch durch das eingebaute Farbmessgerät 6 (indem mit dem Farbmessgerät 6 der Farbcode 805 auf dem Chart detektiert wird), dass es sich hierbei um ein Kalibrations-Chart 801 handelt. Mit dem integrierten Farbmesskopf werden die aufgedruckten Farbfelder 802 ausgemessen und die dabei ermittelten Farbmesswerte 806 mit den vorgängig eingespeisten Referenzwerten 803 verglichen. Eine Stufe 807 berechnet dazu die maximalen farbmetrischen Abweichungen sowie die mittlere farbmetrische Abweichung der Farbmesswerte 806 aller Messfelder 802 zu den Referenzwerten 803. Falls die mittlere Abweichung sowie die maximale Abweichung irgend eines Farbmessfeldes 802 unter einem vorbestimmten Grenzwert liegt, gilt der Drukker als kalibriert. Die Einhaltung bzw. Nichteinhaltung der Grenzwerte werden dem Anwender signalisiert, indem z.B. ein Zertifikat 808 oder ein Abweichungsprotokoll auf dem Drukker ausgegeben wird.

Die Genauigkeit des Systems kann, wie schon erwähnt, dadurch noch erhöht werden, dass anhand der in das Kalibrations-Chart eingeflochtenen Weiss-Felder eine Zwischenkalibration auf Papierweiss durchgeführt wird.

**Patentansprüche**

1. Digitaldrucker mit einem Druckkopf (3), Antriebsmitteln (4) für den Druckkopf, einer Transportvorrichtung (1) für zu bedruckendes Substrat (2), ein Farbmessgerät (6) zur farbmetrischen Ausmessung von auf dem Substrat befindlichen Messfeldern (31) und einer digitalen Steuerung (10) für die Transportvorrichtung, den Druckkopf, die Antriebsmittel und das Farbmessgerät, wobei die Steuerung (10) eine Schnittstelle (14) zur Zuführung von digitalen Druck- und anderen Daten und einen Programmspeicher (12) und einen Datenspeicher (13) aufweist, welcher Programmspeicher (12) die für den Betrieb des Druckers erforderlichen Steuerungsprogramme enthält, die die vom Farbmessgerät (6) erzeugten Messdaten auswerten sowie auch ein Farbmanagementmodul umfassen, welches anhand von gespeicherten oder über die Schnittstelle (14) zugeführten Ausgabeprofilen Druckdaten in den Farbraum des Druckers transformieren kann und dadurch die farbrichtige Druckausgabe bewirkt, **dadurch gekennzeichnet,**
**dass** im Datenspeicher (13) für jede gängige Systemkonfiguration des Digitaldruckers wie beispielsweise Tinten-Typen und Papiertypen ein Ausgabeprofil (204_1- 204_n) abgelegt ist, dass zu jedem Ausgabeprofil (204_1 - 204_n) zusätzlich zu den eigentlichen Profilierungsdaten die vom Farbmessgerät erzeugten Messwerte von Testfeldem abgespeichert sind, und
**dass** die Steuerung (10) eine Profilauswahlfunktion (201 - 231) umfasst, welche das für die Druckausgabe anzuwendende Ausgabeprofil (204) aufgrund von mittels des Farbmessgeräts (6) automatisch durchgeführten Messungen an ausgedruckten Farbmessfeldern (231) aus einer Anzahl der gespeicherten Ausgabeprofile (204_1- 204_n) automatisch auswählt.

2. Drucker nach Anspruch 1, **dadurch gekennzeichnet, dass** die Steuerung (10) eine Profilierungsfunktion (101-105) umfasst, welche automatisch oder durch einen Benutzer ausgelöst ohne manuellen Eingriff ein Ausgabeprofil (104) erzeugen und abspeichern kann.

3. Drucker nach Anspruch 2, **dadurch gekennzeichnet, dass** die Profilierungsfunktion (101-105) das Ausgabeprofil (104) aufgrund der mittels des Farbmessgeräts (6) an ausgedruckten Farbmessfeldern (31) automatisch gemessenen Farbmesswerte (102) und anhand der dem Ausdruck dieser Farbmessfelder zugrundeliegenden Druckdaten (101) berechnet.

4. Drucker nach einem der vorangehenden Ansprüche, **dadurch gekennzeichnet, dass** die Profilauswahlfunktion (201-231) eine automatische Neuprofilierung über die Profilierungsfunktion (101-105) veranlasst, wenn keines der gespeicherten Ausgabeprofile (204_1 - 204_n) als geeignet erkannt wird.

5. Drucker nach einem der vorangehenden Ansprüche, **dadurch gekennzeichnet, dass** die Steuerung (10) eine Profilverifikationsfunktion (301-331) umfasst, welche das für die Druckausgabe angewandte Ausgabeprofil (306) aufgrund von mittels des Farbmessgeräts (6) automatisch durchgeführten Messungen an ausgedruckten Farbmessfeldern (331) auf Eignung unter den gegebenen Druckbedingungen überprüft und die Eignung vorzugsweise durch Ausgabe einer Bild- oder Textmarke (310) signalisiert.

6. Drucker nach einem der vorangehenden Ansprüche, **dadurch gekennzeichnet, dass** die Steuerung (10) eine Profilverifikationsfunktion (301-331) umfasst, welche das für die Druckausgabe angewandte Ausgabeprofil (306) aufgrund von mittels des Farbmessgeräts (6) automatisch durchgeführten Messungen an ausgewählten Messstellen (331) des Ausdrucks auf Eignung unter den gegebenen Druckbedingungen überprüft und die Eignung vorzugsweise durch Ausgabe einer Bild- oder Textmarke (310) signalisiert, wobei aus den Druckdaten (301) für die zu den Messstellen (331) gehörenden Bildpunkte durch Farbtransformation mittels des angewandten Ausgabeprofils (306) Soll-Farbmesswerte (303) berechnet und diese Soll-Farbmesswerte mit an den Messstellen (331) gemessenen Farbmesswerten (307) verglichen werden, und wobei das angewandte Ausgabeprofil (306) als geeignet erkannt wird, wenn die farbmetrischen Abweichungen zwischen den berechneten Soll-Farbmesswerten (303) und den gemessenen Farbmesswerten (307) unter einem vorgegebenen Toleranzwert liegen.

7. Drucker nach Anspruch 5 oder 6, **dadurch gekennzeichnet, dass** die Profilverifikationsfunktion (301-331) eine automatische Neuprofilierung über die Profilierungsfunktion (101-105) veranlasst, wenn das angewandte Ausgabeprofil (306) als nicht geeignet erkannt wird.

8. Drucker nach einem der vorangehenden Ansprüche, **dadurch gekennzeichnet, dass** die Steuerung (10) eine Sonderfarbenprüfungsfunktion (401-405) umfasst, welche die Korrektheit von ausgedrückten Sonderfarben aufgrund von mittels des Farbmessgeräts (6) automatisch durchgeführten Messungen an einem die Sonderfarbe enthaltenden Farbmessfeld (403) und Vergleich der dabei erhaltenen Farbmesswerte (404) mit dem Drucker zugeführten Referenzwerten (402) überprüft und das Vergleichsergebnis vorzugsweise durch eine ausgedruckte Marke (406) signalisiert.

9. Drucker nach einem der vorangehenden Ansprüche, **dadurch gekennzeichnet, dass** die Steuerung (10) eine Prüfungsfunktion (501-509) für Standardbedingungen umfasst, welche die Korrektheit von ausgedruckten Farben aufgrund von mittels des Farbmessgeräts (6) automatisch durchgeführten Messungen an ausgedruckten Farbtestfeldem (504) mit bekannten digitalen Vorgabewerten (505) und Vergleich der dabei erhaltenen Messwerte (507) mit den Vorgabewerten (505) überprüft und das Vergleichsergebnis vorzugsweise durch eine ausgedruckte Marke (509) signalisiert.

10. Drucker nach einem der vorangehenden Ansprüche, **dadurch gekennzeichnet, dass** die Steuerung (10) eine Eintestfunktion (601-606) für die optimale Farbmittelmenge umfasst, welche die optimale Farbmittelmengeneinstellung (606) des Druckers aufgrund von mittels des Farbmessgeräts (6) automatisch durchgeführten Messungen an mit unterschiedlichen Farbmittelmengeneinstellungen ausgedruckten Farbmessfeldern (602) ermittelt, wobei die mit den unterschiedlichen Farbmittelmengeneinstellungen erzielten Farbräume bestimmt werden und als optimale Farbmittelmengeneinstellung (606) im wesentlichen die niedrigste Farbmittelmengeneinstellung gewählt wird, bei deren Erhöhung keine substantielle Erweiterung des Farbraums mehr erreicht wird.

11. Drucker nach einem der vorangehenden Ansprüche, **dadurch gekennzeichnet, dass** die Steuerung (10) eine Profilierungsfunktion (701-705b) umfasst, welche für jedes Substrat (2) zwei Ausgabeprofile (705a, 705b) erzeugt und diesem zuordnet, wobei ein Profil (705a) das Verhalten bei nassen Farben und ein Profil (705b) das Verhalten bei trockenen Farben beschreibt.

12. Drucker nach einem der vorangehenden Ansprüche, **dadurch gekennzeichnet, dass** die Steuerung (10) eine Profilierungsfunktion (701-705b) für nasse und getrocknete Druckfarben umfasst, welche ein Ausgabeprofil (705a) für nasse Druckfarben aufgrund der an ausgedruckten, noch nassen Farbmessfeldern (702a) mittels des Farbmessgeräts (6) automatisch gemessenen Farbmesswerte (703a) und anhand der dem Ausdruck dieser Farbmessfelder zugrundeliegenden Druckdaten (701) berechnet und welche ein Ausgabeprofil (705b) für getrocknete Druckfarben aufgrund der an ausgedruckten, bereits getrockneten Farbmessfeldern (702b) mittels des Farbmessgeräts (6) automatisch gemessenen Farbmesswerte (703b) und anhand der dem Ausdruck dieser Farbmessfelder zugrundeliegenden Druckdaten (701) berechnet.

13. Drucker nach einem der vorangehenden Ansprüche, **dadurch gekennzeichnet, dass** die Steuerung (10) eine Profilierungsfunktion (701-707) für nasse und getrocknete Druckfarben umfasst, welche ein Ausgabeprofil (705a) für nasse Druckfarben aufgrund der an ausgedruckten, noch nassen Farbmessfeldern (702a) mittels des Farbmessgeräts (6) automatisch gemessenen Farbmesswerte (703a) und anhand der dem Ausdruck dieser Farbmessfelder zugrundeliegenden Druckdaten (701) berechnet und welche ein Ausgabeprofil (705b) für getrocknete Druckfarben aufgrund von für die Farbmessfelder berechneten synthetischen Farbwerten (703b) und anhand der dem Ausdruck der Farbmessfelder zugrundeliegenden Druckdaten (701) berechnet, wobei die synthetischen Farbwerte (703b) durch Modellierung aus den an den nassen Farbmessfeldern (702a) gemessenen Farbmesswerten (703a) berechnet werden.

**14.** Drucker nach Anspruch 13, **dadurch gekennzeichnet, dass** die bei der Modellierung verwendeten Korrekturparameter vom Benutzer durch Angabe einer Substratgruppe vorgegeben werden können.

**15.** Drucker nach einem der vorangehenden Ansprüche, **dadurch gekennzeichnet, dass** die Steuerung (10) eine Kalibrierungsfunktion (801-808) umfasst, welche anhand von an den Farbmessfeldern (802) eines in den Drucker eingeführten Kalibrierungs-Charts (801) mittels des Farbmessgeräts (6) automatisch durchgeführten Messungen und durch Vergleich (807) der dabei gemessenen Farbmesswerte (806) der Messfelder (802) mit dem Drucker zugeführten Referenzfarbmesswerten (803) der Messfelder (802) ermittelt, ob der Drucker innerhalb vorgegebener Toleranzgrenzen kalibriert ist, und das Vergleichsergebnis vorzugsweise durch Ausgabe eines Zertifikats (808) oder eines Abweichungsprotokolls signalisiert.

**16.** Drucker nach Anspruch 15, **dadurch gekennzeichnet, dass** die Kalibrierungsfunktion (801-808) dazu ausgebildet ist, einen auf dem Kalibrations-Chart (801) vorgesehenen Farbcode (805) mittels des Farbmessgeräts (6) zu lesen und zu erkennen.

**17.** Drucker nach Anspruch 15 oder 16, **dadurch gekennzeichnet, dass** die Kalibrierungsfunktion (801-808) dazu ausgebildet ist, anhand von auf dem Kalibrierungs-Chart (801) vorgesehenen Weissfeldern eine Zwischenkalibrierung auf Papierweiss durchzuführen.

**18.** Drucker nach einem der vorangehenden Ansprüche, **dadurch gekennzeichnet, dass** das Farbmessgerät (6) feststehend in der Nähe eines Längsrands des zu bedruckenden Substrats (2) und in Vorschubrichtung des Substrats nach dem Druckkopf (3) angeordnet ist, und dass die Steuerung (10) dazu eingerichtet ist, mittels des Druckkopfs (3) Farbmessfelder (31) in Vorschubrichtung des Substrats hintereinander an der Position des Farbmessgeräts (6) auf das Substrat (2) auszugeben.

**19.** Drucker nach einem der vorangehenden Ansprüche, **dadurch gekennzeichnet, dass** das Farbmessgerät (6) als unbeweglich angeordneter Zeilenscanner ausgebildet ist, und dass die Steuerung (10) dazu eingerichtet ist, mittels des Druckkopfs (3) Farbmessfelder (31) in einer zweidimensionalen Anordnung an der Position des Farbmessgeräts (6) auf das Substrat (2) auszugeben.

**20.** Drucker nach einem der vorangehenden Ansprüche, **dadurch gekennzeichnet, dass** das Farbmessgerät (6) transversal zur Vorschubrichtung des zu bedruckenden Substrats (2) motorisch verstellbar ausgebildet ist, und dass die Steuerung (10) dazu eingerichtet ist, mittels des Druckkopfs (3) Farbmessfelder (31) auf das Substrat auszugeben und das Farbmessgerät (6) an die Positionen der Farbmessfelder zu bewegen.

**21.** Drucker nach einem der vorangehenden Ansprüche, **dadurch gekennzeichnet, dass** die Steuerung (10) eine Auslesefunktion aufweist, um in einem Profil gespeicherte Soll-Farbwerte auszulesen und für die weitere Verwendung zur Verfügung zu stellen.

**22.** Drucker nach einem der vorangehenden Ansprüche, **dadurch gekennzeichnet, dass** die Steuerung (10) eine Funktion enthält, welche mittels des Farbmessgeräts (6) automatisch gemessene Farbmesswerte an einen angeschlossenen externen Rechner (PC) ausgeben kann.

**23.** Drucker nach einem der vorangehenden Ansprüche, **dadurch gekennzeichnet, dass** die Steuerung (10) eine Funktion enthält, welche die korrekte Profilierung und oder die Einhaltung von Standardwerten und oder die korrekte Druckausgabe durch Ausdruck einer Bild- oder Textmarke signalisiert.

**24.** Drucker nach einem der vorangehenden Ansprüche, **dadurch gekennzeichnet, dass** die Steuerung (10) eine Funktion enthält, welche speziell für die Qualitätskontrolle ausgebildete Messfelder erzeugen und über den Druckkopf (3) auf das Substrat (2) ausgeben kann.

**25.** Drucker nach einem der vorangehenden Ansprüche, **dadurch gekennzeichnet, dass** die Steuerung (10) eine Funktion enthält, welche bei der Ausgabe von Mehrfachkopien jede Druckausgabe mittels des Farbmessgeräts (6) an den gleichen Stellen ausmisst und die dabei gewonnenen Farbmesswerte an den angeschlossenen Rechner ausgibt.

**Claims**

**1.** A digital printer having a print head (3), drive means (4) for the print head, a transport device (1) for the substrate (2) to be printed, a colorimeter (6) for the colorimetric measurement of measurement fields (31) located on the substrate and a digital control unit (10) for the transport device, the print head, the drive means and the colorimeter, the control unit (10) including an interface (14) for supplying digital printing data and other data and a program memory (12) and a data memory (13), which program memory (12) contains the control programs required for operation of the printer, which analyse the measurement data produced by the colorimeter (6) and also include a colour management module, which on the basis of output profiles stored or inputted via the interface (14) can transform printing data into the colour space of the printer and thereby effects the correct colour print output,
**characterised in that** an output profile (204_1, 204_n) is stored in the data memory (13) for each current system configuration of the digital printer such as, for example, ink types and paper types,
**in that** for each output profile (204_1 - 204_n), in addition to the actual profiling data, the measured values of test fields produced by the colorimeter are stored,
and **in that** the control unit (10) includes a profile selection function (201 - 231) which automatically selects the output profile (204) to be used for the print output from a number of stored output profiles (201_1 - 204_n) on the basis of measurements automatically performed by means of the colorimeter (6) on printed out colour measurement fields (231).

2. A printer according to Claim 1,
**characterised in that** the control unit (10) includes a profiling function (101-105) which is triggered automatically or by a user and can produce and store an output profile (104) without manual intervention.

3. A printer according to Claim 2,
**characterised in that** the profiling function (101-105) calculates the output profile (104) on the basis of the colour measurement values (102) automatically measured by means of the colorimeter (6) on printed out colour measurement fields (31) and by means of the print data (101) forming the basis of the printout of these colour measurement fields.

4. A printer according to one of the preceding Claims,
**characterised in that** the profile selection function (210-231) initiates an automatic new profiling by way of the profiling function (101-105) when none of the stored output profiles (204_1 - 204_n) is identified as suitable.

5. A printer according to one of the preceding Claims,
**characterised in that** the control unit (10) includes a profile verification function (301-331) which checks the output profile (306) used for the print output for suitability under the given printing conditions on the basis of measurements automatically performed by means of the colorimeter (6) on printed colour measurement fields (331) and signals the suitability, preferably by outputting an document or text mark (310).

6. A printer according to one of the preceding Claims,
**characterised in that** the control unit (10) includes a profile verification function (301-331) which checks the output profile (306) used for the print output for suitability under the given printing conditions on the basis of measurements automatically performed by means of the colorimeter (6) at selected measurement locations (331) of the printout, and signals the suitability, preferably by outputting a document or text mark (310),
whereby nominal colour measurement values (303) are calculated by colour transformation by means of the applied output profile (306) from the print data (301) for the picture elements belonging to the measurement locations (331) and these nominal colour measurement values are compared with colour measurement values (307) measured at the measurement locations (331),
and whereby the applied output profile (306) is identified as being suitable when the calorimetric deviations between the calculated nominal colour measurement values (303) and the measured colour measurement values (307) are below a preset tolerance value.

7. A printer according to Claim 5 or 6,
**characterised in that** the profile verification function (301-331) initiates an automatic new profiling by way of the profiling function (101-105) when the applied output profile (306) is identified as being unsuitable.

8. A printer according to one of the preceding Claims,
**characterised in that** the control unit (10) includes a special colour testing function (401-405), which tests the correctness of printed special colours on the basis of measurements automatically performed by means of the colorimeter (6) on a colour measurement field (403) containing the special colour and by comparison of the colour measurement values obtained thereby (404) with reference values (402) fed to the printer, and signals the result of the comparison preferably by a printed mark (406).

9. A printer according to one of the preceding Claims,
**characterised in that** the control unit (10) includes a test function (501-509) for standard conditions, which checks the correctness of printed colours on the basis of measurements performed automatically by means of the colorimeter (6) on printed colour test fields (504) with known digital preset values (505) and by comparison of the measurement values obtained thereby (507) with the preset values (505), and signals the result of the comparison preferably by a printed out mark (509).

10. A printer according to one of the preceding Claims,
**characterised in that** the control unit (10) includes an initial test function (601-606) for the optimal amount of colorant, which determines the optimal setting (606) for the amount of colorant in the printer on the basis of measurements automatically performed by means of the colorimeter (6) on colour measurement fields (602) printed out with the different settings for the amount of colorant, whereby the colour spaces achieved with the different settings for the amount of colorant are determined and the lowest setting for the amount of colorant is essentially chosen as the optimal setting (606) for the amount of colorant, as if it is increased no substantial enlargement of the colour space is achieved.

11. A printer according to one of the preceding Claims, **characterised in that** the control unit (10) includes a profiling function (701-705b) which for each substrate (2) generates two output profiles (705a, 705b) and assigns them to said substrate, whereby one profile (705a) describes the behaviour for wet inks and one profile (705b) describes the behaviour for dry inks.

12. A printer according to one of the preceding Claims, **characterised in that** the control unit (10) includes a profiling function (701-705b) for wet and dry printing inks, which calculates an output profile (705a) for wet print inks on the basis of the colour measurement values (703a) automatically measured by means of the colorimeter (6) on the printed out and still wet colour measurement fields (702a) and with the printing data (701) forming the basis of the printout of these colour measurement fields and which calculates an output profile (705b) for dried printing inkss on the basis of the colour measurement values (703b) measured automatically by means of the colorimeter (6) on the printed out and already dry colour measurement fields (702b) and with the printing data (701) forming the basis of the printout of these colour measurement fields.

13. A printer according to one of the preceding Claims, **characterised in that** the control unit (10) includes a profiling function (701-707) for wet and dry printing inks, which calculates an output profile (705a) for wet printing inks on the basis of the colour measurement values (703a) automatically measured by means of the colorimeter (6) on printed out and still wet colour measurement fields (702a) and with the printing data (701) forming the basis of the printout of these colour measurement fields and which calculates an output profile (705b) for dried ink colours on the basis of synthetic colour values (703b) calculated for the colour measurement fields and with the printing data (701) forming the basis of the printout of the colour measurement fields, whereby the synthetic colour values (703b) are calculated by modelling from the colour measurement values (703a) measured on the wet colour measurement fields (702a).

14. A printer according to Claim 13, **characterised in that** correction parameters used in the modelling can be preset by the user by indicating a substrate group.

15. A printer according to one of the preceding Claims, **characterised in that** the control unit (10) includes a calibration function (801-808) which, on the basis of measurements automatically performed by means of the colorimeter (6) on the colour measurement fields (802) of a calibration chart (801) inserted into the printer and by comparison (807) of the thereby measured colour measurement values (806) of the measurement fields (802) with the reference colour measurement values (803) of the measurement fields (802) fed to the printer, determines whether the printer is calibrated within preset tolerance limits, and signals the result of the comparison by outputting a certificate (808) or a deviation protocol.

16. A printer according to Claim 15, **characterised in that** the calibration function (801-808) is designed to read and recognize a colour code (805) provided on the calibration chart (801) by means of the colorimeter (6).

17. A printer according to Claim 15 or 16, **characterised in that** the calibration function (801-808) is designed to carry out an intermediate calibration for paper white on the basis of white fields provided on the calibration chart (801).

18. A printer according to one of the preceding Claims, **characterised in that** the colorimeter (6) is located stationary in the vicinity of a longitudinal edge of the substrate (2) to be printed and in the feed direction of the substrate after to the print head (3), and **in that** the control unit (10) is set up to output colour measurement fields (31) onto the substrate (2) one after the other in the feed direction of the substrate at the position of the colorimeter (6) by means of the print head (3).

19. A printer according to one of the preceding Claims, **characterised in that** the colorimeter (6) is designed as an immovably positioned line scanner, and **in that** the control unit (10) is set up to output colour measurement fields (31) (2) in a two-dimensional arrangement onto the substrate at the position of the colorimeter (6) by means of the print head (3).

20. A printer according to one of the preceding Claims, **characterised in that** the colorimeter (6) is designed so that it is displaceable by motor transversely to the feed direction of the substrate (2) to be printed and **in that** the control unit (10) is set up to output colour measurement fields (31) onto the substrate by means of the print head (3) and to move the colorimeter (6) to the positions of the colour measurement fields.

21. A printer according to one of the preceding Claims, **characterised in that** the control unit (10) comprises a readout function in order to read out nominal colour values stored in a profile and to make them available for further use.

22. A printer according to one of the preceding Claims, **characterised in that** the control unit (10) contains a function which can output colour measurement values measured automatically by means of the colorimeter (6) to a connected external computer (PC).

23. A printer according to one of the preceding Claims, **characterised in that** the control unit (10) contains a function which signals the correct profiling and/or adherence to standard values and/or the correct print output by printing out a document or text mark.

24. A printer according to one of the preceding Claims, **characterised in that** the control unit (10) contains a function which can produce measurement fields that are specially designed for quality control purposes and can output them via the print head (3) onto the substrate (2).

25. A printer according to one of the preceding Claims, **characterised in that** the control unit (10) contains a function which, during the output of multiple copies, measures each print output by means of the colorimeter (6) at the same locations and outputs the colour measurement values obtained thereby to the connected computer.

**Revendications**

1. Imprimante numérique comprenant un bouton d'impression (3), des moyens d'entraînement (4) pour le bouton d'impression, un dispositif de transport (1) pour le substrat (2) à imprimer, un colorimètre (6) pour la mesure colorimétrique de champs de mesure (31) se trouvant sur le substrat et une commande numérique (10) pour le dispositif de transport, le bouton d'impression, le bouton d'impression et les moyens d'entraînement et le colorimètre, la commande (10) présentant une interface (14) pour l'arrivée de données d'impression numériques et d'autres données et une mémoire de programme (12) et une mémoire de données (13), laquelle mémoire de programme (12) contient les programmes de commande nécessaires pour l'exploitation de l'imprimante, qui analysent les données de mesure générées par le colorimètre (6) et comprennent également un module de gestion de couleur, qui peut transformer à l'aide de profilés d'édition stockés ou amenés par l'interface (14) des données d'impression dans l'espace de couleur de l'imprimante et entraîne ainsi l'édition d'impression correcte au niveau des couleurs, **caractérisée en ce que**

un profil d'édition (204_1-204_4_n) est déposé dans la mémoire de données (13) pour chaque configuration de système courante de l'imprimante numérique comme par exemple des types d'encre et des types de papier, **en ce que**, pour chaque profil d'édition (204_1-204_4_n), les valeurs de mesure, générées par le colorimètre, de champs test sont mémorisées en supplément des données de profilage proprement dites, et **en ce que** la commande (10) comprend une fonction de sélection de profil (201-231), qui sélectionne le profil d'édition (204) à appliquer pour l'édition d'impression sur la base de mesures effectuées automatiquement au moyen du colorimètre (6) sur des champs de colorimétrie (231) imprimés à partir d'un certain nombre des profils d'édition (204_1-204_4_n) mémorisés.

2. Imprimante selon la revendication 1, **caractérisée en ce que** la commande (10) comprend une fonction de profilage (101-105), qui peut générer et stocker un profil d'édition (104) automatiquement ou déclenché par un utilisateur sans intervention manuelle.

3. Imprimante selon la revendication 2, **caractérisée en ce que** la fonction de profilage (101-105) calcule le profil d'édition (104) sur la base des valeurs de colorimétrie (102) mesurées automatiquement au moyen du colorimètre (6) sur des champs de colorimétrie (31) imprimés et à l'aide des données d'impression (101) prises à la base de l'impression de ces champs de colorimétrie.

4. Imprimante selon l'une quelconque des revendications précédentes, **caractérisée en ce que** la fonction de sélection de profil (201-231) ordonne un nouveau profilage automatique par la fonction de profilage (101-105), si aucun des profils d'édition mémorisés (204_1-204_4_n) n'est reconnu comme approprié.

5. Imprimante selon l'une quelconque des revendications précédentes, **caractérisée en ce que** la commande (10) comprend une fonction de vérification de profil (301-331), qui vérifie si le profil d'édition (306) appliqué pour l'édition d'impression convient dans les conditions d'impression données sur la base de mesures effectuées automatiquement au moyen du colorimètre (6) sur des champs de colorimétrie (331) édités et signale cette aptitude de préférence par l'édition d'un repère d'image ou d'un repère de texte (310).

6. Imprimante selon l'une quelconque des revendications précédentes, **caractérisée en ce que** la commande (10) comprend une fonction de vérification de profil (301-331), qui vérifie si le profil d'édition (306) appliqué pour l'édition d'impression convient dans les conditions d'impression données sur la base de mesures effectuées automatiquement au moyen du colorimètre (6) en des points de mesure (331) sélectionnés de l'impression et signale la qualification de préférence par l'édition d'un repère d'image ou d'un repère de texte (310), des valeurs de colorimétrie théoriques (303) étant calculées à partir des données d'impression (301) pour les points d'image appartenant aux points de mesure (331) par la transformation de couleur au moyen du profil d'édition (306) appliqué et ces valeurs de colorimétrie théoriques étant comparées avec des valeurs de colorimétrie (307) mesurées aux points de mesure (331), et le profil d'édition (306) appliqué étant reconnu approprié lorsque les écarts de colorimétrie entre les valeurs de colorimétrie théoriques (303) calculées et les valeurs de colorimétrie (307) mesurées sont situées au-dessous d'une valeur de référence prédéfinie.

7. Imprimante selon la revendication 5 ou 6, **caractérisée en ce que** la fonction de vérification de profil (301-331) ordonne un nouveau profilage automatique par la fonction de profilage (101-105), lorsque le profil d'édition (306) appliqué n'est pas reconnu approprié.

8. Imprimante selon l'une quelconque des revendications précédentes, **caractérisée en ce que** la commande (10) comprend une fonction de contrôle de couleur spéciale (401-405), qui contrôle l'aspect correct de couleurs spéciales imprimées sur la base de mesures effectuées automatiquement au moyen du colorimètre (6) sur un champ de colorimétrie (403) incluant la couleur spéciale et sur la base de la comparaison des valeurs de colorimétrie (404) incluses ici avec des valeurs de référence (402) amenées à l'imprimante et signale le résultat de la comparaison de préférence par un repère (406) imprimé.

9. Imprimante selon l'une quelconque des revendications précédentes, **caractérisée en ce que** la commande (10) comprend une fonction de test (501-509) pour des conditions standard, qui vérifie le caractère correct de couleurs imprimées sur la base de mesures effectuées automatiquement au moyen du colorimètre (6) sur des champs de test de couleur (504) imprimés avec des valeurs prédéfinies (505) numériques connues et par comparaison des valeurs de mesure (507) obtenues ici avec les valeurs spécifiées (505) et signale le résultat de la comparaison de préférence par un repère (509) imprimé.

10. Imprimante selon l'une quelconque des revendications précédentes, **caractérisée en ce que** la commande (10) comporte une fonction monotest (601-606) pour la quantité optimale de matière colorante, qui détermine le réglage optimal de la quantité de matière colorante (606) de l'imprimante sur la base de mesures effectuées automatiquement au moyen du colorimètre (6) sur des champs de colorimétrie (602) imprimés avec différents réglages de quantité de matière colorante, les espaces couleur obtenus avec les différents réglages de quantité de matière colorante étant déterminés et sensiblement le plus faible réglage de quantité de matière colorante, lors de l'élévation de laquelle on n'obtient plus une extension substantielle de l'espace de couleur, étant choisi comme réglage optimal des quantités de matière colorante (606).

11. Imprimante selon l'une quelconque des revendications précédentes, **caractérisée en ce que** la commande (10) comprend une fonction de profilage (701-705b), qui génère deux profils d'édition (705a, 705b) pour chaque substrat (2) et les attribue à ce substrat, un profil (705a) décrivant le comportement dans le cas de couleurs humides et un profilé (705b) le comportement en cas de couleurs sèches.

12. Imprimante selon l'une quelconque des revendications précédentes, **caractérisée en ce que** la commande (10) comporte une fonction de profilage (701-705b) pour des couleurs d'impression humides et séchées, qui calculent un profil d'édition (705a) pour des couleurs d'impression humides sur la base des valeurs de colorimétrie (703a) mesurées de façon automatique sur des champs de colorimétrie (702a) imprimés et encore humides au moyen du colorimètre (6) et à l'aide des données d'impression (701) à la base de l'impression de ces champs de colorimétrie et qui calcule un profil d'édition (705b) pour des couleurs d'impression séchées sur la base des valeurs de colorimétrie (703b) mesurées automatiquement sur des champs de colorimétrie (702b) imprimés et déjà séchés au moyen du colorimètre (6) et à l'aide des données d'impression (701) prises pour base de l'impression de ces champs de colorimétrie.

13. Imprimante selon l'une quelconque des revendications précédentes, **caractérisée en ce que** la commande (10) comporte une fonction de profilage (701-707) pour des couleurs d'impression humides et séchées, qui calculent un profil d'édition (705a) pour des couleurs d'impression humides sur la base des valeurs de colorimétrie (703a) mesurées automatiquement sur des champs de colorimétrie (702a) imprimés et encore humides au moyen du colorimètre (6) et à l'aide des données d'impression (701) prises pour base de l'impression de ces champs de colorimétrie et qui calcule un profil d'édition (705b) pour des couleurs d'impression séchées sur la base de valeurs chromatiques (703b) synthétiques calculées pour des champs de colorimétrie et à l'aide des données d'impression (701) prises pour base de l'impression des champs de colorimétrie, les valeurs chromatiques (703b) synthétiques étant calculées par modélisation à partir des valeurs de colorimétrie (703a) mesurées sur les champs de colorimétrie (702a) humides.

14. Imprimante selon la revendication 13, **caractérisée en ce que** les paramètres de correction utilisés lors de la modélisation peuvent être prédéfinis par l'utilisateur par l'indication d'un groupe substrat.

15. Imprimante selon l'une quelconque des revendications précédentes, **caractérisée en ce que** la commande (10) comporte une fonction de calibrage (801-808) qui détermine à l'aide de mesures effectuées automatiquement sur les champs de colorimétrie (802) d'une charte de calibrage (801) introduite dans l'imprimante au moyen du colorimètre (6) et par comparaison (807) des valeurs de colorimétrie (806) alors mesurées des champs de mesure (802) avec des valeurs de colorimétrie de référence (803), amenées à l'imprimante, des champs de mesure (802) si l'imprimante est calibré à l'intérieur de limites de tolérance prédéfinies et signale le résultat de la comparaison de préférence par l'édition d'un certificat (808) ou d'un protocole d'écart.

16. Imprimante selon la revendication 15, **caractérisée en ce que** la fonction de calibrage (801-808) est réalisée pour lire et détecter un code de couleur (805) prévu sur la charte de calibrage (801) au moyen du colorimètre (6).

17. Imprimante selon la revendication 15 ou 16, **caractérisée en ce que** la fonction de calibrage (801-808) est conçue pour effectuer un calibrage intermédiaire du blanc de papier à l'aide de champs blancs prévus sur la charte de calibrage (801).

18. Imprimante selon l'une quelconque des revendications précédentes, **caractérisée en ce que** le colorimètre (6) est disposé de façon fixe à proximité d'un bord longitudinal du substrat (2) à imprimer et dans le sens d'avancement du substrat après le bouton d'impression (3), et **en ce que** la commande (10) est conçue pour éditer au moyen du bouton d'impression (3) des champs de colorimétrie (31) dans le sens d'avancement du substrat les uns derrière les autres sur la position du colorimètre (6) sur le substrat (2).

19. Imprimante selon l'une quelconque des revendications précédentes, **caractérisée en ce que** le colorimètre (6) est conçu comme un scanner linéaire disposé de façon immobile et **en ce que** la commande (10) est aménagée pour éditer au moyen du bouton d'impression (3) des champs de colorimétrie (31) dans un agencement en deux dimensions sur la position du colorimètre (6) sur le substrat (2).

20. Imprimante selon l'une quelconque des revendications précédentes, **caractérisée en ce que** le colorimètre (6) est conçu de façon réglable par moteur transversalement au sens d'avancement du substrat (2) à imprimer et **en ce que** la commande (10) est aménagée pour éditer des champs de colorimétrie (31) sur le substrat au moyen du bouton d'impression (3) et pour déplacer le colorimètre (6) sur les positions des champs de colorimétrie.

21. Imprimante selon l'une quelconque des revendications précédentes, **caractérisée en ce que** la commande (10) présente une fonction de sélection afin de sélectionner des valeurs chromatiques théoriques stockées dans un profil et pour les mettre à disposition pour l'utilisation ultérieure.

22. Imprimante selon l'une quelconque des revendications précédentes, **caractérisée en ce que** la commande (10) contient une fonction qui peut éditer des valeurs colorimétriques mesurées automatiquement au moyen du colorimètre (6) sur un ordinateur (PC) externe raccordé.

23. Imprimante selon l'une quelconque des revendications précédentes, **caractérisée en ce que** la commande (10) contient une fonction qui signale le profilage correct et/ou le respect de valeurs standard et/ou l'édition d'impression correcte par l'impression d'un repère d'image ou de texte.

24. Imprimante selon l'une quelconque des revendications précédentes, **caractérisée en ce que** la commande (10) contient une fonction qui peut générer des champs de mesure réalisés spécialement pour le contrôle de qualité et peut l'éditer par le bouton d'impression (3) sur le substrat (2).

25. Imprimante selon l'une quelconque des revendications précédentes, **caractérisée en ce que** la commande (10) contient une fonction qui mesure lors de l'édition de copies multiples chaque sortie d'impression au moyen du colorimètre (6) aux mêmes endroits et envoie les valeurs de colorimétrie ainsi obtenues à l'ordinateur raccordé.

**Fig. 1**

**Fig. 2**

**Fig. 3**

## CMYK — 301

3

331

6 — 307

Lab

305

306

Lab — 302

Σ — 304

Lab — 303

Σ dE — 308

309

310

311

OK

**Fig. 4**

401

3

6

404

Lab

402

Lab

403

Lab

405

406

**Fig. 5**

**Fig. 6**

**Fig. 7**

Fig. 8

Fig. 9

**Fig. 10**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20020080373 A
- US 2002162470 A
- DE 19844495 A
- US 5680327 A
- DE 19722073 A
- EP 1041372 A